# EUROPÄISCHE PATENTSCHRIFT

(11) **EP 3 603 383 B1**
(45) Veröffentlichungstag und Bekanntmachung des Hinweises auf die Patenterteilung: **17.08.2022**
(21) Anmeldenummer: 19186911.4
(22) Anmeldetag: 18.07.2019
(51) Int. Cl.: A01G 24/44, A01G 24/15, A01G 24/28

(54) **VERWENDUNG VON PHYLLOSILIKATEN FÜR VERMEHRUNGSSUBSTRATE IM GARTEN- UND PFLANZENBAU**
USE OF PHYLLOSILICATES FOR GROWING SUBSTRATES IN GARDENING AND PLANT CULTIVATION
UTILISATION DE PHYLLOSILICATES POUR SUBSTRATS DE CROISSANCE DANS LE JARDINAGE ET LA CULTURE DE PLANTES

(30) Priorität: 30.07.2018 DE 102018118367
(43) Veröffentlichungstag der Anmeldung: 05.02.2020
(73) Patentinhaber: Stephan Schmidt KG, 65599 Dornburg-Langendernbach (DE)
(72) Erfinder: Schellhorn, Matthias, Dr., 65556 Limnburg (DE)
(74) Vertreter: Müller, Eckhard

(56) Entgegenhaltungen:
- EP-A1- 0 010 638
- CN-A- 106 171 643
- US-A1- 2012 278 956

## Beschreibung

Die vorliegende Erfindung betrifft die Verwendung von Phyllosilikaten, insbesondere solche der Palygorskit-Untergruppe, in Vermehrungssubstraten für den Garten- und Pflanzenbau. Besonders bevorzugte Vermehrungssubstrate für die Zwecke der vorliegenden Erfindung sind sog. Presstopferden und Traysubstrate.

Tone oder Tonminerale sind im Garten- und Pflanzenbau für die dort verwendeten (Vermehrungs-) Substrate weit verbreitet. Bekannt ist, dass Tone in der Regel folgende Eigenschaften besitzen, die insbesondere bei Kulturen mit längeren Wachstumsperioden einen positiven Einfluss auf das Pflanzenwachstum und den Ertrag haben:
gute Wasserspeicherung und Verringerung von leicht verfügbarem Wasser, gute Nährstoffspeicherung für z.B. Kalium und Phosphor aufgrund chemischer Wechselwirkungen und Verbesserung der Wiederbenetzbarkeit ausgetrockneter Substrate.

Dabei werden Tone auch im Gemüseanbau oder bei der Kultur von Topfkräutern verwendet. Dadurch steht den Pflanzen weniger leicht verfügbares Wasser zur Verfügung, wodurch ein gedrungener und kompakter Wuchs gefördert wird. Für diese Zwecke werden bevorzugt Bentonit haltige Tone oder Tonmischungen eingesetzt. In Presstopferden ist die Verwendung von Tonen zur Erhöhung der Festigkeit und der Klebrigkeit bekannt. Zu diesem Zweck werden aktuell bevorzugt feinkörnige kaolinitische Tone, aber auch Bentonite eingesetzt.

Ein zentraler Bestandteil der im Garten- und Pflanzenbau verwendeten Substrate ist Torf in den Erscheinungsformen des Weiß- und/oder Schwarztorfs. Besonders der Weißtorf findet im Gemüse- und Gartenbau vielseitige Verwendung. Weißtorf wird aus den oberen Schichten der Moore gewonnen und hat in der Regel einen pH-Wert von 3-4, während normale, unbehandelte Gartenerde meist einen pH-Wert von 5-6,5 aufweist.

Schwarztorf oder Hochmoortorf ist eine zweite wichtige Torfkomponente, die bereits seit mehr als 40 Jahren in Substraten oder Vermehrungssubstraten im Garten- und Pflanzenbau eingesetzt wird. Ohne diesen Rohstoff wäre die moderne Produktion von Presstopferden nicht möglich. In Presstopferden sichert der Schwarztorf die Verarbeitungsfähigkeit auf den modernen Presstopfmaschinen, sodass stabile Presstöpfe mit automatischen Pflanzmaschinen verarbeitet werden können. Diese Eigenschaft des Schwarztorfs beruht auf dessen generell höherer Klebrigkeit gegenüber Weißtorf, wodurch die Stabilität (Zusammenhalt) der gewonnenen Produkte erhöht wird.

So enthalten auf dem Markt befindliche typische Presstopfsubstrate bis zu 100 % Schwarztorf, neuerdings auch zwischen 35-50 Gew.-% Weißtorf und zwischen 50-65 Gew.-% Schwarztorf. Auch in Substraten für Beet- und Balkonpflanzen ist ein Schwarztorfanteil von 0-70 Gew.-% üblich. Weiterhin enthalten diese Substrate Bindemittel und bevorzugt zwischen 1100-1600 g NPK-Dünger/m3 fertig gemischtes Substrat. Übliche Traysubstrate enthalten zwischen 70 und 85 Gew.-% Weißtorf, zwischen 0 und 20 Gew.-% Schwarztorf, bis zu 15 Gew.-% Perlite, fertig gemischtes Substrat und bis zu 100 g Spurenelemente/m3. Ferner können solche Traysubstrate bis zu 500 g NPK-Dünger (14-10-18) /m3 Substrat aufweisen.

Als bevorzugte Vermehrungssubstrate sind allgemein im Garten- und Pflanzenbau und auch für die Zwecke der vorliegenden Erfindung, sogenannte Presstöpfe und Traysubstrate zu nennen. Bei beiden Substraten spielt deren Stabilität eine wesentliche Rolle, also die Eigenschaft, dass das Substrat zusammen mit der Jungpflanze und dem Wurzelballen beim Umtopfen nicht zerfällt.

Presstöpfe sind, wie der Name bereits aussagt, durch Pressen auf Presstopfmaschinen hergestellte Substratblöcke, die ohne zusätzlichen Topf (aus Ton, Keramik oder Kunststoff) als Gefäß und Substrat zur Aufzucht von Jungpflanzen aus Saatgut verwendet werden. In Presstöpfen werden eine Vielzahl von Gemüsejungpflanzen kultiviert, ebenso wie Tomaten, Melonen und Gurken in größeren Presstöpfen wachsen. Auch in Biopresstopferden in Verbindung mit Kompost, ist der Schwarztorf nicht zu ersetzen. Der Presstopf als Anzuchtsystem ist in der Kultur nach wie vor schneller als das Trayanzuchtsystem, und z.B. Gemüsejungpflanzen wachsen im Presstopf sofort und ohne Wachstumsschock im Feld an, ohne dass wertvolle Kulturzeit verloren geht.

Bei den sogenannten Trays handelt es sich um Paletten mit zahlreichen Vertiefungen (Multitopfpaletten, welche meist aus Kunststoffmaterial hergestellt sind), in die das Substrat für die Aufzucht der Pflanzen aus Saatgut lose eingefüllt wird. Auch hier ist die Stabilität des Inhalts eines Pflanztopfes (Substrat, Wurzelballen, Jungpflanze) beim Umtopfen entscheidend.

Die notwendige mechanische Stabilität erhält das Substrat (zusammen mit Wurzelballen und Jungpflanze) insbesondere durch den Schwarztorfanteil im Substrat. Schwarztorf hat generell eine höhere Klebrigkeit als Weißtorf. Dies gilt insbesondere für Schwarztorf aus den norddeutschen Hochmooren. Allerdings sind die Mengen an Schwarztorf, die aus dieser Region für den Markt zur Verfügung gestellt werden können, stark rückläufig. Es ist davon auszugehen, dass selbst bei einem reduzierten Angebot bzw. Verbrauch Norddeutschland in etwa 10-15 Jahren ausgetorft sein wird.

Vor diesem Hintergrund war es eine Aufgabe der vorliegenden Erfindung, Substrate zur Verfügung zu stellen, bei denen ohne eine nicht tolerierbare Einbuße an Substratstabilität die Menge an den besonders klebrigen und begehrten (norddeutschen) Schwarztorftypen merklich reduziert werden kann.

Diese Substrate müssen zumindest eine Stabilität aufweisen, die es gestattet, stabile Presstöpfe / Substratblöcke auf automatischen Presstopfmaschinen durch einaxiales Pressen herzustellen und Traysubstrate ohne Zerfall aus- und umzutopfen und/oder die Substrate (mit Wurzelballen und Jungpflanze) in den Freilandanbau zu überführen.

Die erfindungsgemäße Aufgabe wird dadurch gelöst, dass man die klebrigen Schwarztorftypen (z.B. aus Norddeutschland) durch weniger klebrigen Schwarztorf aus anderen Regionen und/oder durch Weißtorf ersetzt und dem so erhaltenen Substrat zur Wiederherstellung oder Erhöhung einer ausreichenden Klebrigkeit Ton oder Tonmischungen zusetzt. Dabei ist zu berücksichtigen, dass die Aufwandmengen an Ton möglichst gering zu halten sind, um das Gewicht des Substrates, welches ein wichtiger Kostenfaktor für den Transport ist, nicht allzu negativ zu beeinflussen. Ein Hauptaugenmerk der erfindungsgemäßen Lösung liegt somit in einer hohen Effizienz der eingesetzten Tone.

Geeignet für den erfindungsgemäßen Zweck sind allgemein nicht quellfähige, bedingt quellfähige sowie quellfähige Tonminerale. Der Einsatz quellfähiger Tonminerale hat sich im Hinblick auf das physikalische Langzeitverhalten als eingeschränkt tauglich erwiesen, da diese Tone aufgrund von Kationenaustausch ihre Klebrigkeit verlieren können.

Besonders geeignet sind hingegen Tonminerale aus der Palygorskit-Reihe, die als rheologisch äußerst stabil gegenüber Salzlösungen gelten. Palygorskit (veraltet auch als Bergleder, Bergkork sowie als Attapulgit bekannt) ist ein Schichtsilikat mit der chemischen Zusammensetzung (Mg,Al)4[OH/(Si,Al)4O10]2 . (4+4) H2O. Die in den runden Klammern angegebenen Elemente Magnesium und Aluminium bzw. Silizium und Aluminium können sich in dieser Formel jeweils gegenseitig vertreten (Substitution, Diadochie), stehen jedoch immer im selben Mengenverhältnis zu den anderen Bestandteilen des Minerals. D. h., der Begriff Palygorskit umfasst verschiedene Minerale, die zwar makroskopisch kaum voneinander zu unterscheiden sind und gleiche bis sehr ähnliche Eigenschaften aufweisen, die jedoch chemisch nicht eine exakt einheitliche/identische Zusammensetzung aufweisen. Diese Aussagen gelten sinngemäß auch für die anderen Vertreter der sog. Palygorskit-Reihe.

Nach der veralteten aber immer noch gebräuchlichen 8. Auflage der Mineralsystematik nach Strunz gehört Palygorskit zur Mineralklasse der Silikate und Germanate, dort zur Abteilung der Schichtsilikate (Phyllosilikate), wo er zusammen mit Falcondoit, Kalifersit, Loughlinit, Sepiolith, Tuperssuatsiait, Windhoekit, Ferrisepiolith und Yofortierit die unbenannte Gruppe VIII/H.33 bildet (für die Zwecke der vorliegenden Erfindung Palygorskit-Reihe genannt). In der von der International Mineralogical Association (IMA) verwendeten 9. Auflage der Strunz'schen Mineralsystematik findet sich Palygorskit in der unbenannten Gruppe 9.EE.20 und in der Systematik der Minerale nach Dana in der Untergruppe mit der System-Nr. 74.03.01a.01.

Unter Palygorskit-Reihe wird hier und im Folgenden ausschließlich die vorangehend beschriebene Gruppe VIII/H.33 nach Strunz, 8. Auflage, mit allen aufgeführten Mitgliedern und den beschriebenen chemischen Abwandlungen verstanden.

Die zur Erhöhung der Klebrigkeit des Substrats zugesetzten Tone der Palygorskit-Reihe können nur einen Vertreter dieser Reihe oder auch eine Kombination aus zwei oder mehr Vertretern dieser Reihe umfassen, wobei die Mengen-/Gewichtsverhältnisse der Tonminerale der Palygorskit-Reihe zueinander keinerlei Beschränkungen unterliegen.

Bevorzugt werden die Tonminerale der Palygorskit-Reihe für die erfindungsgemäße Verwendung mit anderen Tonen gemischt, bei denen es sich um bereits bekannte Bestandteile von im Handel befindlichen Vermehrungssubstraten handelt. Durch diese weiteren Tone werden den erfindungsgemäßen Substraten weitere positive Eigenschaften verliehen, wie z.B. verbesserte Wasseraufnahme, gesteigertes Wachstum bzw. gesteigerte Produktion von Biomasse, verbesserte Wurzelbildung, welche zu einer Verbesserung der Nährstoffaufnahme durch die Pflanzen führt. Auch kann der Einsatz von Mineralen aus der Palygorskit-Reihe in der Aufwandmenge durch allgemein lagerstättenbedingte hohe Salzgehalte begrenzt sein, sodass diese Mengenbegrenzung durch die Abmischung mit sehr salzarmen kaolinitischen Tonen ausgesteuert werden kann. So sind Konzentrationen von gelöstem Natrium (1:5 Eluat) in Mineralen der Palygorskit Reihe von über 700 mg/l bekannt, zulässig sind aber maximal 250 mg/l. Beispiele für solche zusätzlich beigefügten Tone sind in der Regel Kaolinite, Illite und Bentonite, wobei Bentonite aufgrund der physikalischchemischen Wechselwirkungen und Salzgehalte eher nachrangig einzustufen sind. Dabei beträgt der Anteil der Minerale der Palygorskit-Reihe an der Gesamttonmenge im erfindungsgemäßen Substrat bevorzugt von 10 bis einschl. 100 Gew.-%, insbesondere von 30-50 Gew.-%.

Der Gesamtanteil an Ton in den erfindungsgemäßen Substraten, welche neben Torf alle weiteren Haupt- und Nebenbestandteile üblicher Substrate wie z.B. Perlite, Kompost und Kokosprodukte in den üblichen Mengen enthalten können, beträgt bevorzugt 5-50 kg Ton/m3 fertig gemischtes Substrat, insbesondere 10-20 kg Ton/m3 fertig gemischtes Substrat. Der Tonanteil bezieht sich in diesen Angaben auf die Mischung, der reine Palygorskit-Anteil beträgt in diesem Fall somit insbesondere 3-10 kg/m³ (pro m³ fertig gemischtes Substrat).

Durch den Einsatz der erfindungsgemäßen Tonminerale kann z.B. in den vorangehend beschriebenen Substraten der Anteil des Schwarztorfs mit erhöhter Klebrigkeit deutlich reduziert werden, und zwar in Abhängigkeit von der verwendeten Tonmenge um bis zu 100 %. Da sich mit der Umstellung auf völlig schwarztorffreie Produkte die Kulturführung in anderen Parametern drastisch ändern könnte, ist in der Praxis mit einer moderaten Anpassung in 20 - 30 % Schritten bis hin zu völlig schwarztorffreien Produkten zu rechnen.

Die erfindungsgemäßen Tone aus der mineralogischen Abteilung der Phyllosilikate, insbesondere die Tonminerale der Palygorskit-Reihe, sowie deren erfindungsgemäße Mischungen mit anderen Tonmineralen werden bevorzugt in gemahlener Form zum Einsatz gebracht. Vorzugsweise werden Mahlfeinheiten mit maximal 8-10 Gew.-% Rückstand auf einem 63 µm Sieb eingesetzt. Grundsätzlich sind auch andere Mahlfeinheiten verwendbar, z.B. mit Rückständen von 0 - 50 Gew.-% auf einem 63 µm Sieb. Allgemein kommen alle erfindungsgemäß eingesetzten Tonminerale bzw. deren Mischungen bevorzugt in chemisch unveränderter Form zum Einsatz.

Die Herstellung der Substrate (auch Erden genannt) erfolgt, wie aus dem Stand der Technik bekannt, durch Mischen der Ausgangskomponenten mit handelsüblichen Mischaggregaten, wie z.B. mit einem Trommelmischer. Traysubstrate, die ebenfalls durch Mischen der gewünschten Komponenten hergestellt werden, werden beim Anwender lose in die Mulden der Trays eingefüllt, während Presstöpfe durch Verpressen der Substratausgangsmischung auf automatischen Presstopfmaschinen (einaxiales Verpressen) erzeugt werden. US 2012/0278956 A1 betrifft ein Wachstumssubstrat für Pflanzen, welches frei von organischen Komponenten wie Boden/Erde, Torf oder Rindenmaterial ist. Es handelt sich dabei um ein schwammartiges Matrixmaterial, welches durch einen Gehalt an einem hydrophilen Polymer (Polyurethan) und einem amorphen kieselsäurehaltigen Material gekennzeichnet ist.

Die vorliegende Erfindung wird anhand des nachfolgenden Ausführungsbeispiels erläutert.

Bis auf den Tonanteil identische Substratmischungen (qualitativ und quantitativ) werden unter exakt gleichen Versuchsbedingungen zu Presstöpfen verpresst und anschließend wird die Druckfestigkeit (in kPa) bestimmt. Der Tonanteil in den Mischungen 1, 2 und 4 beträgt jeweils 30 kg Ton/m³ fertiges Substrat.

Die eigentliche Versuchsdurchführung (Herstellung der Presstöpfe und Bestimmung ihrer Druckfestigkeit) erfolgt nach im Stand der Technik gängigen und dem Fachmann hinreichend bekannten Methoden, wie diese z. B. im Bundesministerium für Bildung und Forschung, Final Report, Projekt 03G0722A, "Control mechanisms of clays and their specific surface area in growing media - assessment of clay properties and their parametrization for the optimization of plant quality" unter Abschnitt 3.2 auf den Seiten 38 - 52 beschrieben sind.
Mischung 1 enthält als Ton nur Bentonit; Druckfestigkeit (= Druck beim Bruch des Presstopfs): 75 kPa
Mischung 2 enthält kaolinitischen Ton; Druckfestigkeit: 50 kPa
Mischung 3 enthält keinen Tonanteil; Druckfestigkeit: 28 kPa (Referenzmischung)
Mischung 4 enthält kaolinitischen Ton und Attapulgit, im Verhältnis 50/50; Druckfestigkeit: 90 kPa.

Anhand des vorangehenden Beispiels werden die erfindungsgemäß erzielbaren Verbesserungen gegenüber den Substraten des Standes der Technik unmittelbar deutlich.

Die erzielte Erhöhung der Druckfestigkeit ist eindeutig. Aus dieser höheren Druckfestigkeit verbunden mit der generell vorhandenen Schwindung bei Rücktrocknung des Substrats resultiert eine deutlich vereinfachte Austopfbarkeit aufgrund der höheren Stabilität des Substrats/Presstopfs. Diese verbesserte Austopfbarkeit ist mit Mischungen mit Bentonit nicht gegeben, Somit konnte gezeigt werden, dass der Zusatz von Tonmineralen aus der Abteilung der Phyllosilikate, insbesondere aus der Palygorskit-Reihe, zu Vermehrungssubstraten führt, deren Stabilität erhöht ist bzw. erlaubt, den Anteil des klebrig wirkenden Schwarztorfs in diesen Substraten bei unveränderter Stabilität signifikant zu reduzieren.

Der Einfluss der erfindungsgemäßen Tone oder Tonmischungen auf das Pflanzenwachstum bzw. die Pflanzenentwicklung ist im Kontext der hier vorliegenden Erfindung zunächst nur von untergeordneter Bedeutung. Diese Substrateigenschaft kann der Anwender durch Zugabe hierfür speziell geeigneter Tone weiter steuern. Hierfür können bevorzugt 10 - 20 kg dieser speziell geeigneten Tone pro m³ fertiges Substrat zugesetzt werden, wobei der Gesamttonanteil im fertigen Substrat bevorzugt nicht mehr als 50 kg pro m³ betragen sollte.

Verbesserung der Wasserspeicherung im Substrat und Verbesserung der Schnelligkeit der Wasseraufnahme durch die Pflanzen sind weitere positive Nebeneffekte, die der Einsatz der erfindungsgemäßen Tone mit sich bringt. Diese Effekte lassen sich isoliert betrachtet auch durch herkömmliche Tone aus dem Stand der Technik erzielen.

## Patentansprüche

1. Verwendung von Tonmineralen aus der Palygorskit-Reihe zur Erhöhung der Druckfestigkeit von Schwarztorfhaltigen Vermehrungssubstraten in Form von Presstöpfen oder Presstopferden oder in Form von Traysubstraten.

2. Verwendung nach Anspruch 1, **dadurch gekennzeichnet, dass** eine Mischung von verschiedenen Vertretern aus der Palygorskit-Reihe zur Erhöhung der Druckfestigkeit der Vermehrungssubstrate verwendet wird.

3. Verwendung nach Anspruch 1 oder 2, **dadurch gekennzeichnet, dass** eine Mischung aus Tonmineralen aus der Palygorskit-Reihe mit anderen Tonmineralen zur Erhöhung der Druckfestigkeit der Vermehrungssubstrate verwendet wird.

4. Verwendung nach Anspruch 3, **dadurch gekennzeichnet, dass** der Anteil von Tonmineralen aus der Palygorskit-Reihe in der Mischung 10 - 100 Gew.-%, bevorzugt 30 - 50 Gew.-%, aller dort enthaltenen Tonminerale beträgt.

5. Verwendung nach einem der Ansprüche 1 bis 4, **dadurch gekennzeichnet, dass** der Gesamttonanteil in dem fertigen Substrat nicht mehr als 50 kg/m³ beträgt.

6. Verwendung nach einem der Ansprüche 1 bis 5, **dadurch gekennzeichnet, dass** der Tonanteil aus der Palygorskit-Reihe im fertigen Substrat 3 - 10 kg/m³ beträgt.

7. Verwendung nach einem der Ansprüche 1 bis 6, **dadurch gekennzeichnet, dass** als Tonmineral der Palygorskit-Reihe Palygorskit (Attapulgit) verwendet wird.

8. Verfahren zur Erhöhung der Druckfestigkeit von Schwarztorfhaitigen Vermehrungssubstraten, bevorzugt in Form von Presstöpfen oder Presstopferden oder in Form von Traysubstraten, **dadurch gekennzeichnet, dass** man diesen Substraten Tonminerale aus der Palygorskit-Reihe zusetzt.

## Claims

1. Use of clay minerals from the palygorskite series to increase the compressive strength of black-peat-containing propagation substrates in the form of pressed pots or pressed potting soils or in the form of tray substrates.

2. Use according to Claim 1, **characterized in that** a mixture of various representatives from the palygorskite series is used to increase the compressive strength of propagation substrates.

3. Use according to Claim 1 or 2, **characterized in that** a mixture of clay minerals from the palygorskite series is used with other clay minerals to increase the compressive strength of propagation substrates.

4. Use according to Claim 3, **characterized in that** the proportion of clay minerals from the palygorskite series in the mixture is 10-100% by weight, preferably 30-50% by weight, of all clay minerals contained therein.

5. Use according to any of Claims 1 to 4, **characterized in that** the total proportion of clay in the finished substrate is not more than 50 kg/m³.

6. Use according to any of Claims 1 to 5, **characterized in that** the proportion of clay from the palygorskite series in the finished substrate is 3-10 kg/m³.

7. Use according to any of Claims 1 to 6, **characterized in that** the employed clay mineral of the palygorskite series is palygorskite (attapulgite).

8. Process for increasing the compressive strength of black-peat-containing propagation substrates, preferably in the form of pressed pots or pressed potting soils or in the form of tray substrates, **characterized in that** clay minerals from the palygorskite series are added to these substrates.

## Revendications

1. Utilisation de minéraux argileux de la série de la palygorskite pour augmenter la résistance à la compression de substrats de propagation contenant de la tourbe noire sous forme de mottes pressées ou de terres de mottes pressées ou sous forme de substrats de plateaux.

2. Utilisation selon la revendication 1, **caractérisée en ce qu'**un mélange de différents représentants de la série de la palygorskite est utilisé pour augmenter la résistance à la compression des substrats de propagation.

3. Utilisation selon la revendication 1 ou 2, **caractérisée en ce qu'**un mélange de minéraux argileux de la série de la palygorskite avec d'autres minéraux argileux est utilisé pour augmenter la résistance à la compression des substrats de propagation.

4. Utilisation selon la revendication 3, **caractérisée en ce que** la proportion de minéraux argileux de la série de la palygorskite dans le mélange est de 10 à 100 % en poids, de préférence de 30 à 50 % en poids, de tous les minéraux argileux qui y sont contenus.

5. Utilisation selon l'une quelconque des revendications 1 à 4, **caractérisée en ce que** la proportion totale d'argile dans le substrat fini n'est pas supérieure à 50 kg/m³.

6. Utilisation selon l'une quelconque des revendications 1 à 5, **caractérisée en ce que** la proportion d'argile de la série de la palygorskite dans le substrat fini est de 3 à 10 kg/m³.

7. Utilisation selon l'une quelconque des revendications 1 à 6, **caractérisée en ce que** la palygorskite (attapulgite) est utilisée en tant que minéral argileux de la série de la palygorskite.

8. Procédé pour augmenter la résistance à la compression de substrats de propagation contenant de la tourbe noire, de préférence sous forme de mottes pressées ou de terres de mottes pressées ou sous forme de substrats de plateaux, **caractérisé en ce que** des minéraux argileux de la série de la palygorskite sont ajoutés à ces substrats.
